# EUROPEAN PATENT APPLICATION

(11) **EP 3 858 679 A1**
(43) Date of publication of application: **04.08.2021**
(21) Application number: 20425011.2
(22) Date of filing: 10.03.2020
(51) Int. Cl.: B60R 11/02, B60N 2/60, B60N 2/879, B60N 2/90

(54) **HEADREST COVER FOR CARS FITTED WITH SCREEN TO BROADCAST ADVERTISING**

(30) Priority: 31.01.2020 IT 202000001894
(71) Applicant: Pedico, Dylan, 51069 Koeln (DE)
(72) Inventor: Pedico, Dylan, 51069 Koeln (DE)
(74) Representative: Emmi, Mario

(57) **Abstract**

The present invention relates to a headrest cover for a headrest of a seat of a means of transport; according to the invention, the said headrest cover comprises a video screen.

## Description

### Technical field

The present invention relates to the technical field of accessories for seats of means of transport, in particular headrests for land means of transport and other means of transport, preferably land means of transport such as cars.

In particular, the invention relates to an innovative headrest cover structured so as to broadcast advertising messages.

### Brief outline of prior art

Many means of transport, such as taxis or buses, travel hourly and all over the streets of the cities where they operate. Because of this reason, a very efficient means for broadcasting advertising consists in the use of such means of public transport through stickers with advertising logos which are stuck outside or inside the means of transport in question.

In fact, it is common to come across buses on the road having an advertising message on their chassis, for example on an external side, like on service vehicles such as taxis.

In this manner, during its journey, the public means of transport, which is visible to many users/passers, broadcasts efficaciously the advertising message in question.

By way of example, there are known advertising of travel companies, medical clinics, language schools etc. which arrange their own advertising slogans onto a band or adhesive label which is glued to the chassis of the means of transport.

An advertising through stickers with images/logos/phrases etc., irrespective of the size of the image is obviously static and relatively less efficient. Moreover, the possibility to vary advertising, by advertising more things/persons/institutions at the same time, is extremely limited and depends from the available physical space. Obviously, it is not possible to cover the whole surface of a chassis of a means of transport, or a side wall for example, with many stickers, since none of them would be visible and thus they would be mixed up. Therefore, the advertising effect and the "impression" effect for a user would disappear.

Moreover, when it is necessary to modify advertising, the sticker must be removed with the risk of damaging the chassis or the need to clean it from possible remaining glue.

At the current state of the art, there are video screens which are integrated in seat structures. These video screens can obviously send any audio/video message including advertising messages.

For example, intercontinental air flights resort to this solution, where videos are generally used for broadcasting movies/music and/or flight service messages.

However, this solution is not flexible since, in the event of video failure, it is necessary to stop the means and this may even require a replacement of the whole seat and in any case, it implies a complex technical intervention. In fact, if the video is integrated inside the seat structure, a complex disassembly that forces the whole vehicle to stop will be necessary.

Furthermore, in this case, these videos are generally controlled by a central system belonging to the means of transport but there is no possibility of remote control. The video screen may be pre-loaded with video through a USB key, for example, but this solution is not so flexible.

### Summary of the invention

According to what has been disclosed above, it is felt the need of a system which enables an efficient broadcast of advertising messages (audio and/or video) within a means of transport, for example a land means of transport such as a car, a bus, a train or the like.

In particular, the aim of the present invention is to provide an alternative for broadcasting advertising to traditional advertising stickers which may be glued to various parts of such means of transport.

The aim of the present invention is also to provide a solution wherein, in the event of video breakage, there is no need to stop the whole means of transport and there is no need for a technical intervention which may even entail the replacement of the whole seat.

Therefore, these and other aims are achieved through the present headrest cover, according to claim 1.

According to the invention, this headrest cover comprises a video screen.

In this manner, since the video screen is integrated or connectable, for example in removable manner, to the headrest cover, now it is possible to broadcast advertising video or images in versatile manner.

The video screen is applied preferably in removable manner to the headrest cover and in this manner, in the event of video breakage, it is possible to remove it easily from the headrest cover and replace it by a new one.

Even in the event that the fastening between the video and the headrest cover is permanent, for example by gluing, in the event of breakage it is sufficient to remove the whole headrest cover with the integrated video to repair it and readily replace it with a new headrest cover having another video.

In this manner, it is not necessary anymore to stop the means of transport for a long time.

The video screen may be fitted with ports such as USB flash drive to upload programs and fitted with the standard electronic componentry of video screens.

However, advantageously, the said video screen may be configured in such a way as to be remotely controllable.

Therefore, it may be fitted with a connection system to the Internet to which it is connected permanently or at predetermined time intervals.

In this manner, it can be remotely controlled, for example the functioning state thereof may be monitored and/or remotely controlled.

Advantageously said video screen is of flexible type, for example "AMOLED" type.

In this case, it is resistant to impacts and in the event of impact of the vehicle it is more resistant to breakages, thus preventing passengers from cutting themselves with splinters.

Moreover, it is well adaptable to the shape of the headrest cover and it does not cause deformations of fabric of the headrest cover since it is not heavy.

Advantageously, the thickness of said video screen may be, for example, smaller than 1 millimeter.

Advantageously, the video screen may be integrated in the headrest cover according to one or a combination of said solutions:
- The headrest cover comprises a containment pocket and the said video screen is arranged within said pocket;
- The video system is glued or sewed to a surface of the headrest cover;
- In a further embodiment the headrest cover comprises press-studs or Velcro on predetermined points to be fastened to the screen in removable manner.

Advantageously the headrest cover may be made of fabric, for example elasticized as per prior art.

Therefore, there is also described here the single headrest cover for a headrest of a seat of a means of transport configured for enabling to apply onto a surface thereof (11) a video screen (20), preferably in removable and repositionable way.

In that case, as already mentioned, there may be comprised a containment pocket suitable for containing the said video screen.

Alternatively, there may be envisaged points (12) with Velcro or press-studs to fasten the screen in removable way.

Advantageously, for this purpose, there may be envisaged an area of the said headrest cover having one or more points for enabling the fastening of the video screen for example through adhesive, clips, Velcro and the like.

In this manner, such as in the event of breakage, the video may be readily replaced and then repositioned.

It is also described here the combination of a headrest cover for a seat of a means of transport and an integrated or fastened video screen, preferably in removable and repositionable manner, to said headrest cover.

In all the described embodiments, as mentioned, the video screen is configured for being remotely controllable/accessible.

Therefore, it may be programmed and/or monitored remotely through a suitable electronic device suitable for connecting to the main server for managing the video.

It is also described here the combination of a headrest cover for a seat of a means of transport and a video screen and wherein there are comprised fastening means to fasten the said video to the said headrest cover.

As mentioned, the fastening may be fixed or preferably of removable type in such a way that a video screen may be removed and repositioned or replaced by an equivalent one.

There is also described here a method to send advertising audio/video messages through a video screen, the method envisaging the application of the said video screen to a headrest cover and the application of the headrest cover to the headrest.

The invention also comprises a set of seat covers for cars and trucks including the headrest cover to which the video screen may be fastened.

### Brief description of the drawings

Additional features and advantages of the present headrest cover for a seat will become apparent from the following description of preferred embodiments thereof, given only by way of non-limiting example, with reference to the attached drawings, wherein:
- Figure 1 and figure 2 depict a seat fitted with headrest and a headrest cover according to the invention;
- Figure 3 depicts a video screen which is applied in fixed or removable manner, to the headrest cover;
- Figure 4 depicts a structure which enables a remote control of one or more of said videos;
- Figures from 5 to 7 depict a possible preferred embodiment of fastening of the video to the headrest cover;
- Figure 8 depicts a further embodiment;

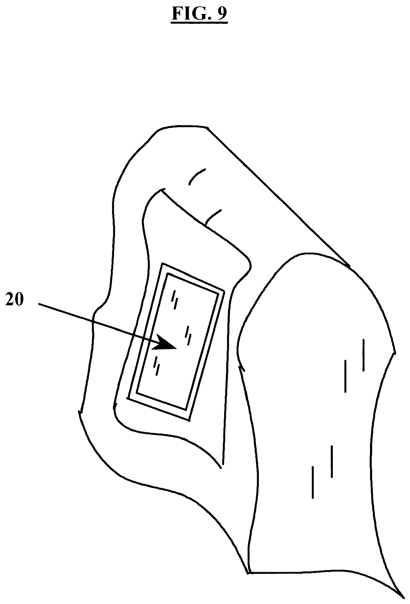

- Finally, figure 9 schematizes a headrest cover fitted with this video screen, preferably of flexible and/or remotely controllable type.

### Description of some preferred embodiments

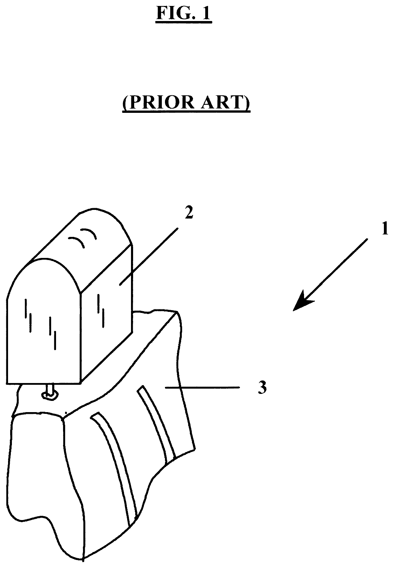

Figure 1 depicts a schematization of a seat according to prior art.

The seat has a seat area which enables the user to sit (it is not depicted in the figure for simplicity purposes) and a backrest 3 which is depicted in part in figure 1.

The high end of the backrest is provided with the headrest 2 which may have various sizes and various ergonomic shapes.

The shapes and ergonomic sizes of the seat and their respective headrest change depending on means of transport from time to time.

For example, sports cars are fitted with seats of a different shape with respect to compact cars.

The headrest 2 is generally fastened to the high part of the backrest of the seat in removable manner (for example, this happens frequently on cars) and moreover, it is adjustable to various heights and/or angulations.

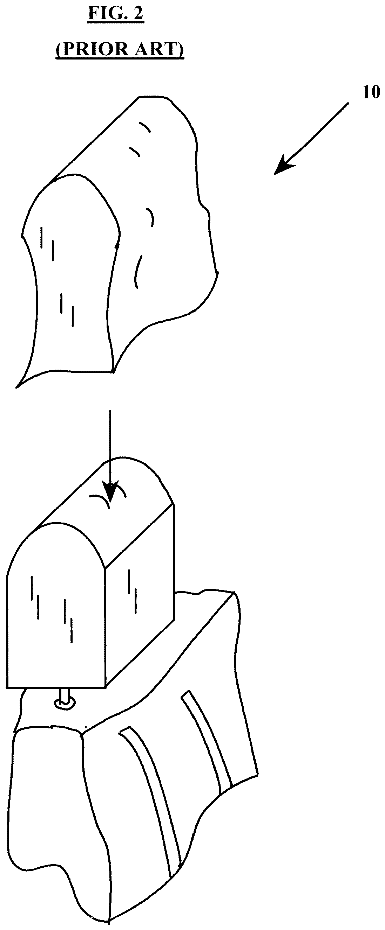

Figure 2 depicts a headrest cover 10 which is applied to the headrest.

The headrest cover is a cap made of fabric or any other material, such as washable cotton, elasticized material in general etc., and it may generally have drawings and different colors.

It is applied onto the headrest to protect the material of the actual headrest from a direct contact.

In this manner, grease of scalps or other residues remain on the headrest cover which is removable and washable in washing machines.

Moreover, by choosing different colors, it is possible to customize the car compartment.

The headrest cover is generally part of a set of seat covers which may be normally purchased in many shops.

There are many brands and varieties of seat covers for cars and means of transport in general, and each one is compatible or specific for one or more brands and/or models of means of transport.

There are headrest covers of any material, among which elasticized, artificial, washable and non-washable materials.

What has been described above is prior art and it is not the specific subject of the present invention, and for this purpose, it is not further described here.

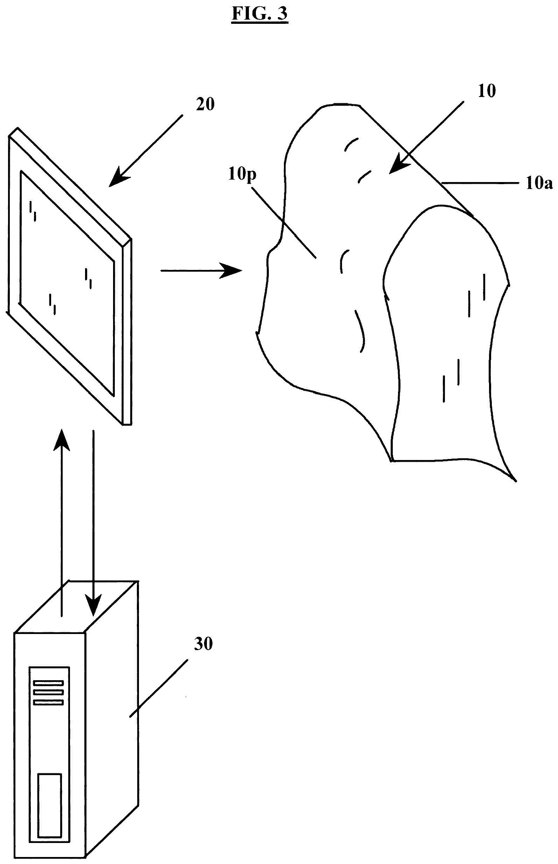

According to the invention, as schematized in figure 3, it is now comprised a video screen 20 which is fastened in permanent or preferably in removable manner to the headrest cover 10.

For this purpose, figure 3 depicts a headrest cover 10 having a rear part (10p) and a front part (10a).

When the headrest cover is applied as a cap to the respective headrest cover, the rear part (10p) faces towards the rear seats in a car, while the front part (10a) is adapted for supporting the user's nape.

According to the invention, the rear part (10p) is fitted with means for enabling the application of a video screen (exactly like the application depicted by the arrow direction in figure 3) or which integrates permanently the video screen into it.

In this way, passengers sitting on rear seats can see the images on the video.

The screen is preferably of remotely controllable type.

In this way, when the headrest cover in question is applied onto a public means of transport such as a taxi, the video can broadcast advertising messages.

Figure 3 depicts a centralized server system 30 to which the user may access through the Internet by using known devices such as PCs, laptop or desktop computers or mobile telephony devices.

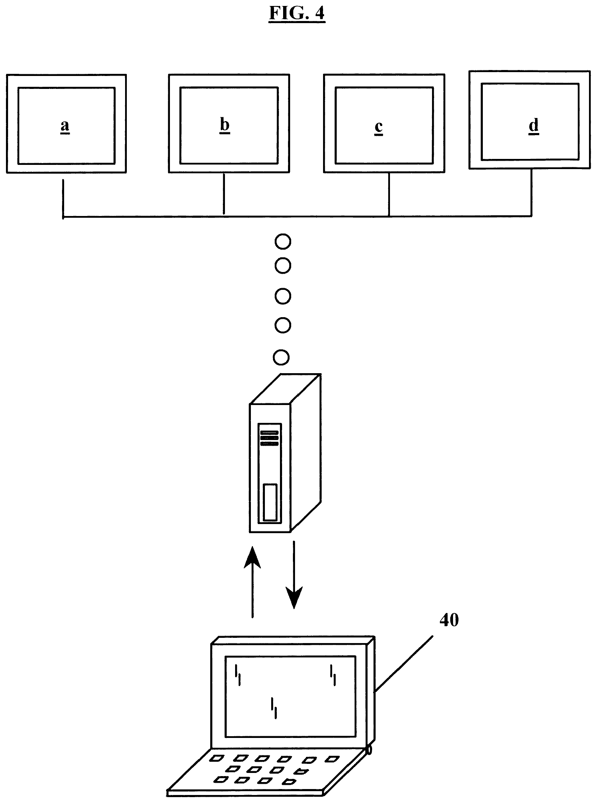

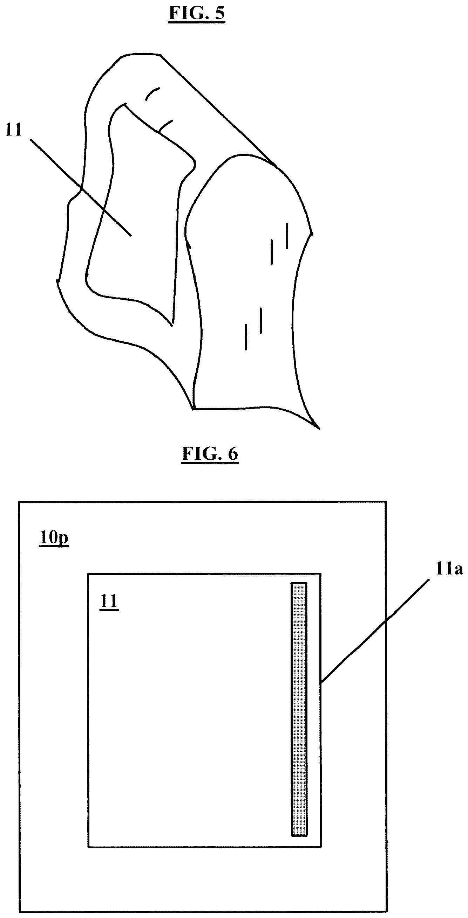

In this way, as schematized in figure 4, a user may control a predetermined number of screens (a...n), each one applied to different means of transport, thus monitoring them real-time.

In fact, figure 4 depicts a PC 40 through which accessing to an own personal area, once connected to the Internet by means of the said server 30.

The access to the personal area requires generally the insertion of one or more log-in credentials to access.

Once logged-in, the user may control his own video screen (for example installed in a taxi company) which communicate with the server system 30 through the Internet.

Therefore, the user may control the operation of video through the server system 30.

If necessary, the user may readily geolocate videos.

For example, the user may activate/deactivate the operation of videos real-time and may control broadcasted video and/or audio messages by modifying them at will and depending on needs in real-time.

This gives a great flexibility to the system since it is not necessary to pre-upload advertising videos in static way, such as through the USB port, but they may be uploaded remotely real-time through the Internet and they may be replaced by other different ones at any time.

Although any video suitable for being connected to a server might be used, the preferred embodiment of the invention favours the use of flexible screens, such as AMOLED screens.

They are particularly thin, even with thickness smaller than 1 millimeter and are structured so as to bend or even roll up like a sheet.

The use of this type of video is extremely advantageous, since the rear surface of the headrest is not regular and then the headrest cover, which retraces the headrest shape, may take convexities and different shapes.

The use of a flexible video screen enables the screen to fit perfectly the shape of the headrest.

Moreover, in the event of impacts, it is much more resistant and this is a guarantee in the event of accidents.

Moreover, they are much lighter, thus the weight thereof is well bearable by the headrest cover which remains in position and does not tend to jut out from the headrest because of the weight of the video.

Otherwise, heavy screens might cause the headrest cover jutting out from the headrest.

These types of flexible video screen are well known per se and already sold on the market and for this reason, they are not described in detailed manner in the present invention.

Going further with the structural description of the invention, there may be various fastening means which enable to fasten the screen to the headrest cover.

In a first possible embodiment of the invention, the rear part (10p) of the headrest cover may envisage a pocket 11 suitable for housing the screen.

Therefore, in a first embodiment of the invention, the pocket may envisage an opening (11a) for inserting the screen, with the opening which may be closed through Velcro, hasp or other equivalent closing system.

The pocket may be obtained for example by gluing or fastening in general a transparent sheet, preferably, plasticized, to the surface (10p) of the headrest cover.

In fact, the pocket must have at least a transparent part thereof so that the screen of the video can be visible through the pocket.

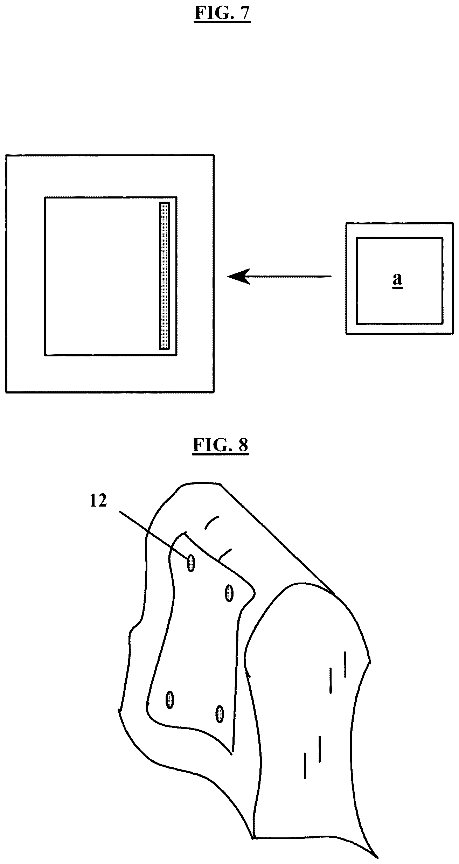

Figure 7 depicts the phase of insertion of the video screen into the aforesaid pocket.

In the event of maintenance, the video screen may be readily be removed from the pocket to be repaired and reinserted into the pocket or replaced by an equivalent one.

The pocket protects well the video screen.

In an embodiment of the invention, schematized in figure 8, the area adapted to the application of the screen envisages, in place of the pocket, one or more points 12 of connection to the video.

For example, figure 8 depicts four points 12, which may include press-studs (i.e. such as clips) of the type male-female snap fasteners.

The male part may be arranged onto said points 12 and female parts onto equivalent points in the rear part of the video (i.e. the surface opposed to the screen) or vice versa.

A male/female snap lock of the video to the surface of the headrest cover occurs by acting a light pressure and pressing the video against such points 12.

The so-structured lock is readily removable.

An equivalent solution, perhaps less safe, is Velcro, i.e. the replacement of points 12 with a Velcro system.

In these embodiments, the screen is not covered generally by a transparent surface like in the case of pocket.

Therefore, figure 9 depicts schematically the headrest cover fitted with this video which is fastened to it, preferably in removable manner.

In this way, in adaptable manner, many advertising messages, even remotely controllable, may be broadcast and in the event of breakage of video, the replacement is immediate since the video is not integrated into the seat structure.

## Claims

1. A headrest cover (10) for a seat of a means of transport **characterized by the fact that** said headrest cover comprises a video screen (20).

2. A headrest cover, according to claim 1, wherein said video screen is remotely controllable.

3. A headrest cover, according to claim 1 or 2, wherein said video screen is of flexible type, for example "AMOLED" type.

4. A headrest cover, according to claim 3, wherein the thickness of said video screen is smaller than 1 millimeter.

5. A headrest cover, according to one or more of the preceding claims, wherein there are comprised fastening means (11, 11a, 12) for enabling to fasten, preferably in removable manner, the video screen to the headrest cover.

6. A headrest cover, according to claim 5, wherein said fastening means comprise one or a combination of said solutions:
- A containment pocket (11) obtained on the headrest cover;
- The video screen is glued or sewed to a surface of the headrest cover;
- Press-studs (12) of the type male-female snap fasteners;
- Velcro (12).

7. A headrest cover for a headrest of a seat of a means of transport configured for enabling to apply onto a surface (11) thereof a video screen, preferably through a removable fastening.

8. A headrest cover, according to claim 7, wherein fastening means are comprised for fastening the said video screen to the headrest cover, preferably said fastening means comprising one or a combination of the said solutions:
- A containment pocket obtained on the headrest cover;
- The video screen is glued or sewed to a surface of the headrest cover;
- Press-studs (12) of the type male-female snap fasteners;
- Velcro (12).

9. The combination of a headrest cover for a seat of a means of transport and a video screen and wherein there are comprised fastening means for fastening the said video to the said headrest cover.

10. A method to send advertising audio/video messages through a video screen, the method providing the application of the said video screen to a headrest cover and the application of the headrest cover to the headrest.
